(19) Europäisches Patentamt
European Patent Office
Office européen des brevets

(11) **EP 2 565 386 A1**

(12) **EUROPÄISCHE PATENTANMELDUNG**

(43) Veröffentlichungstag:
06.03.2013 Patentblatt 2013/10

(51) Int Cl.:
*F01D 15/00* (2006.01)     *F01K 25/10* (2006.01)
*F17C 9/04* (2006.01)

(21) Anmeldenummer: 11009122.0

(22) Anmeldetag: 17.11.2011

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME

(30) Priorität: 29.08.2011   DE 102011111384

(71) Anmelder: **Linde Aktiengesellschaft**
**80331 München (DE)**

(72) Erfinder:
• **Eckl, Robert, Dr.**
  **80339 München (DE)**
• **Ferstl, Johann, Dr.**
  **80995 München (DE)**
• **Windmeier, Christoph, Dr.**
  **82538 Geretsried (DE)**

(54) **Vorrichtung und Verfahren zur Energiewandlung**

(57) Die Erfindung betrifft ein Verfahren zum Betreiben einer Wärmekraftmaschine (1) mit einer nachgeschalteten elektrischen Einrichtung (2), bei dem ein als kryogene Flüssigkeit in einem Tank (3) gelagerter Brennstoff eingesetzt und dazu dem Tank (3) entnommen wird. Die kryogene Flüssigkeit wird nach der Entnahme aus dem Tank (3) zuerst in der Funktion eines Kühlmediums der elektrischen Einrichtung (2) zugeführt und mit mindestens einer Komponente (13, 15) der elektrischen Einrichtung (2) in einen direkten wärmeaustauschenden Kontakt gebracht und danach der Wärmekraftmaschine (1) als Brennstoff zugeführt, wobei die kryogene Flüssigkeit vor diesem Schritt in die gasförmige Phase überführt wird.

Fig. 1

**Beschreibung**

Die Erfindung betrifft ein Verfahren zum Betreiben einer Wärmekraftmaschine mit einer nachgeschalteten elektrischen Einrichtung, bei dem ein als kryogene Flüssigkeit in einem Tank gelagerter Brennstoff eingesetzt und dazu dem Tank entnommen wird.

Die Erfindung geht von Energiewandlungssystemen aus, die eine Wärmekraftmaschine und eine elektrische Einrichtung sowie einen Tank oder anderweitigen Behälter, in denen kryogene Fluide zumindest zum Teil als Flüssigkeiten gespeichert oder gelagert und in der Wärmekraftmaschine als Kraft- bzw. Brennstoff eingesetzt werden.

Mit der Formulierung "Einsatz in der Wärmekraftmaschine" soll hier sowohl der Einsatz in einem Verbrennungsmotor oder einer Gasturbine wie auch der Einsatz als Kraftstoff z.B. für einen externen, der Wärmekraftmaschine zugeordneten Dampferzeuger umfasst sein.

Allgemein umfasst der Begriff der Wärmekraftmaschine Kolben- oder Strömungskraftmaschinen, bei denen die Wärmeenergie des Arbeitsmediums in mechanische Energie umgesetzt wird. Dazu zählen Verbrennungsmotoren (sog. Maschinen mit innerer Wärmezufuhr) sowie Dampfmaschinen, Dampfturbinen und Gasturbinen (sog. Maschinen mit äußerer Wärmezufuhr). Bei Maschinen mit äußerer Wärmezufuhr wird außerhalb der eigentlichen Maschine z.B. in Dampferzeugern oder Brennkammern Wärme durch Verbrennung erzeugt und über einen Wärmetauscher an das Arbeitsmedium einer solchen Wärmekraftmaschine abgegeben.

Die Gesamtheit von Wärmekraftmaschine, elektrischer Einrichtung und Tank für kryogenen Kraft- bzw. Brennstoff wird im Folgenden auch als Energiewandlungssystem bezeichnet.

Besonders geeignete Brennstoffe sind z.B. verflüssigtes Erdgas (LNG), verflüssigter Wasserstoff ($LH_2$) oder verflüssigtes Methan. Es sind jedoch auch andere kryogene Fluide umfasst, die als Brennstoff einsetzbar sind.

Typische Einsatzgebiete für Energiewandlungssysteme mit kryogen gelagerten Brennstoffen sind Schiffs- und U-Boot-Antriebe, Antriebssysteme von Lokomotiven, kommunalen Bus und LKW-Flotten sowie die Elektrizitätserzeugung in abgelegenen oder schwer zugänglichen Regionen ohne Strom- und Erdgasnetz. Aufgrund zunehmend stringenter Abgasrichtlinien ist z.B. zu erwarten, dass der Einsatz von LNG als Schiffskraftstoff in Zukunft stark zunehmen wird.

In der Patentliteratur sind einige wenige Systeme beschrieben, die regasifiziertes LNG als Kraftstoff verwenden und die damit verbundene Kälte nutzen, um die Verbrennungsluft zu trocknen und/oder vorzukühlen oder eine Kühlung zwischen mehreren Kompressorstufen zu erzielen (siehe Auslegeschrift 1 214 256, Offenlegungsschrift DE 10 2006 042 054). Dadurch lassen sich höhere Gesamtwirkungsgrade des Energiewandlungssystems realisieren.

In der Offenlegungsschrift 2155 335 ist ein System beschrieben, bei dem die Abgaswärme aus einer Gasturbine zur Verdampfung des Flüssiggases und, falls erforderlich, zur weiteren Vorwärmung des Brenngases ausgenutzt wird.

Ebenfalls bekannt ist die Nutzung der Verlustwärme aus Energiewandlungssystemen zur Verdampfung einer kryogenen Flüssigkeit durch indirekten Wärmeaustausch mit einem geeigneten Kühlmedium. Wurde die kryogene Flüssigkeit vorher komprimiert, so kann das verdampfte Medium über eine Turbine entspannt werden und mechanische Arbeit verrichten (siehe JP 10-92627).

Eine weitere Möglichkeit ist die Verdampfung von LNG durch ein Arbeitsgas (z.B. Helium oder Stickstoff), das seinerseits in einem Kreisprozess Arbeit verrichtet und durch die Abwärme des Verbrennungsprozesses erhitzt wird (siehe WO 2007/144103).

Weitere Wärmeträgermedien zur Verdampfung des flüssigen Brennstoffs sind z.B. Luft oder Sole, die ihrerseits wieder für Gefrierzwecke genutzt werden können (siehe Auslegeschrift 1 214 256).

Weiterhin kann der zu verdampfende kryogene Brennstoff als Wärmesenke für Kühlprozesse genutzt werden, wobei das Kühlmedium thermische Energie an den Brennstoff abgibt. Als Anwendungen hierfür wurde die Kühlung elektrischer Betriebsmittel vorgeschlagen, z.B. Generatoren oder leistungselektronische Bauteile (siehe WO 99/42706), oder die Kühlung anderer Prozesse, z.B. die Herstellung von $CO_2$ aus einem Verbrennungsabgas oder die Luftzerlegung (siehe Offenlegungsschrift 2155 335, EP 0 580 910).

Bekannt ist auch die Nutzung eines flüssigen kryogenen Kraftstoffs als Wärmesenke für Kühlprozesse, welche supraleitende Maschinen kühlen, z.B. Generatoren oder Spulen zur Speicherung von elektrischer Energie. Als Kältemittel kommen je nach Temperaturniveau der Supraleitung z.B. Helium oder Neon in Frage. Systeme hierfür sind in der Patentliteratur beschrieben (JP 2002-130851, WO 99/42706, WO 2007/001432). Durch die Annäherung der Temperaturniveaus zwischen Wärmequelle und Wärmesenke lässt sich eine höhere Effizienz des Kälteprozesses realisieren als durch die konventionellen Wärmesenken (Umgebungs-)Luft oder Wasser.

In WO 2007/001432 ist eine prinzipielle Anordnung beschrieben, in der die Kühlung eines Hochtemperatur-Supraleiters direkt mit $LH_2$ erfolgt. Die kryogene Flüssigkeit wird dabei verdampft und kann anschließend z.B. für weitere Kühlzwecke oder energetisch in einer WKM oder einer Brennstoffzelle genutzt werden.

Bevor der kryogene Kraftstoff einem Energiewandler zugeführt wird, ist er in der Regel zu verdampfen, anzuwärmen und ggf. zu verdichten. Als Wärmeträger kommen meist Umgebungsluft oder Wasser zum Einsatz, eine energetische Nutzung der Kälte erfolgt dabei nicht. Gleichzeitig sind sowohl der Energiewandler als auch alle damit verbundenen elektrische Betriebsmittel zu kühlen, was je nach Technologie unterschiedliche Kühlmedien und Temperaturniveaus erfordert. Geeignete Anlagen und Apparate für die Wärmeabfuhr sind bereitzustellen, etwa Pumpen, Wärmeübertrager und ggf. Kältemaschinen. Diese reduzieren den Wirkungsgrad und erhöhen die Gesamtkosten des Systems.

Aufgabe der vorliegenden Erfindung ist es, ein hinsichtlich des Wirkungsgrades und der Wirtschaftlichkeit verbessertes Verfahren zum Betreiben eines Energiewandlungssystems zur Verfügung zu stellen.

Die gestellte Aufgabe wird dadurch gelöst, dass die kryogene Flüssigkeit nach der Entnahme aus dem Tank zuerst in der Funktion eines Kühlmediums der elektrischen

Einrichtung zugeführt und mit mindestens einer Komponente der elektrischen Einrichtung in einen direkten wärmeaustauschenden Kontakt gebracht wird, und danach der Wärmekraftmaschine als Brennstoff zugeführt wird, wobei die kryogene. Flüssigkeit vor diesem Schritt in die gasförmige Phase überführt wird.

Dabei ist unter einem direkten wärmeaustauschenden Kontakt zu verstehen, dass kein Hilfsmedium dazwischengeschaltet ist. Im Unterschied zu den herkömmlichen Verfahren existiert kein Zwischenkreis mit einem zirkulierenden Medium und dem dafür notwendigen apparativen Zusatzaufwand. Der wärmeaustauschende Kontakt kann als physikalischer Kontakt, bei dem sich Kühlmedium und zu kühlendes Teil berühren, oder als Kontakt über eine wärmeleitende Trennschicht, wie beispielsweise über eine Rohrwand hinweg, ausgestaltet sein.

Die Energie zur Überführung in die gasförmige Phase (Verdampfung) wird erfindungsgemäß ganz oder teilweise aus dem beschriebenen wärmeaustauschenden Kontakt bezogen. Als kryogene Flüssigkeiten kommen z.B. flüssiges Erdgas (LNG) oder flüssiges Methan bei ca. -161 °C (112 K) oder flüssiger Wasserstoff bei ca. -253 °C (20 K) in Frage. Für die Kühlung von Komponenten kann dabei besonders vorteilhaft die Verdampfungswärme der kryogenen Flüssigkeit, die für Methan ca. 8,2 kJ/mol (0,142 kWh/kg) und für Wasserstoff ca. 0,891 kJ/mol (0,124 kWh/kg) beträgt, genutzt werden.

Bevorzugt werden als elektrische Einrichtung ein oder mehrere elektrische Generatoren, Elektromotoren, Transformatoren, Elektromagnete oder leistungselektronische Einheiten (z.B. Frequenzumrichter) oder Kombinationen der genannten Ausgestaltungen eingesetzt.

An die Wärmekraftmaschinen, z.B. Gasturbine, Gasmotor oder Dampfturbine, angekoppelte elektrische Generatoren können konventionelle Synchron- oder Asynchronmaschinen sein.

Besonders bevorzugt werden als Brennstoff Erdgas, Wasserstoff oder Methan oder andere kryogene Fluide eingesetzt.

Eine vorteilhafte Ausgestaltung der vorliegenden Erfindung sieht vor, dass als Wärmekraftmaschine ein Verbrennungsmotor eingesetzt wird.

Gemäß einer besonders vorteilhaften Ausgestaltung der vorliegenden Erfindung werden beim Einsatz eines Generators als elektrische Einrichtung die konventionell vorhandenen Kühlkanäle in den Stator- und Rotorblechen und/oder in den Wicklungen des Generators als direkte Leiter- oder Teilleiterkühlung mit der kryogenen Flüssigkeit durchströmt, wobei diese erwärmt und gegebenenfalls zumindest teilweise verdampft wird.

Alternativ können zu den konventionell vorhandenen Kühlkanälen zusätzlich vorgesehene oder diese ersetzende Kühlkanäle zur Durchströmung mit der kryogenen Flüssigkeit verwendet werden.

Durch die erfindungsgemäße Kühlung können die Verluste im Generator minimiert werden. Verluste in Generatoren sind Reibungsverluste in den Lagern und im Luftspalt, Streufeldverluste, Magnetisierungsverluste und ohmsche Verluste. Magnetisierungsverluste und ohmsche Verluste in den Eisenkernen bzw. in den Stator-und Rotorwicklungen erzeugen Wärme, die aus der Maschine abgeführt werden muss. Zu diesem Zweck werden herkömmlich Gase, insbesondere Wasserstoff, Öle oder Wasser verwendet. Die Kühlkanäle verlaufen in den Stator- bzw. Rotorblechen sowie in den Wicklungen als direkte Leiter- oder Teilleiterkühlung (Hohlleiter). Im Sinne der Erfindung werden die konventionellen Kühlmedien durch die kryogene Flüssigkeit ersetzt, die von einem Tank zuerst durch die Kühlkanäle im Stator und Rotor des Generators gepumpt wird und dabei unter Verdampfung die Verlustwärme aufnimmt.

Gemäß einer vorteilhaften Weiterbildung der Erfindung kann der gasförmige Brennstoff nach der soeben beschriebenen Kühlung weiter verwendet werden, um den Luftspalt des Generators zu kühlen.

Mit besonderem Vorteil wird die kryogene Flüssigkeit nach der Entnahme aus dem Tank einer Kryopumpe zugeführt, durch die der Druck der kryogenen Flüssigkeit erhöht wird.

Bevorzugt wird der kryogene Brennstoff nach Passieren der elektrischen Einrichtung und dem direkten wärmeaustauschenden Kontakt und vor dem Eintritt in die Wärmekraftmaschine einem Nachwärmer zugeführt, wobei der kryogene Brennstoff durch den Nachwärmer weiter erwärmt wird, z.B. mit Wasser oder Abwärme aus der Wärmekraftmaschine. Durch den Nachwärmer wird der Brennstoff zweckmäßig für die Verbrennung vorgewärmt.

Desweiteren hat sich eine Verbindungsleitung als zweckmäßig herausgestellt, die es ermöglicht, einen Teil der kryogenen Flüssigkeit an der elektrischen Einrichtung vorbei zu leiten, für den Fall, dass zur Deckung des Brennstoffbedarfs der Wärmekraftmaschine mehr kryogene Flüssigkeit benötigt wird als zur Deckung des Kühlbedarfs in der elektrischen Einrichtung.

Gemäß einer weiteren vorteilhaften Ausgestaltung der Erfindung wird als elektrische Einrichtung ein Generator eingesetzt, der einen Hochtemperatur-Supraleiter aufweist. Die Nutzung der Verdampfungswärme eines kryogen gespeicherten Kraftstoffs für die Kühlung eines Hochtemperatur-Supraleiter-Generators erweist sich dabei als besonderer Vorteil. Im Vergleich zu konventionellen Generatoren lassen sich durch den Einsatz von Hochtemperatur-Supraleitern (HTS) Gewicht und Volumen um 30 % sowie die Energieverluste um 50 % reduzieren. Zum Einsatz kommen dabei keramische HTS, z.B. die Materialkombinationen YBCO-123 (YBa2Cu3O7), Bi-2223 (Bi2Sr2Ca2Cu3O8) oder Bi-2212 (Bi2Sr2CaCu2O5). Während metallische Tieftemperatur-Supraleiter (TTS) mit flüssigem Helium gekühlt werden müssen, ist für HTS im Magnetfeld gemäß aktuellem Stand der Technik eine Kühlung auf etwa 30 K, z.B. durch flüssiges Neon mit einem Siedepunkt von ca. 27 K, ausreichend.

Bevorzugt wird ein Teilstrom des als Flüssigkeit in dem Tank vorliegenden kryogenen Brennstoffs nach Entnahme aus dem Tank über einen Anwärmer direkt der Wärmekraftmaschine zugeführt und ein Teilstrom in einen Vakuumbehälter eingespeist. Durch die Absenkung des Drucks unter den Atmosphärendruck, wie es durch eine dem Vakuumbehälter nachgeschaltete Vakuumpumpe ermöglicht wird, kann der Siedepunkt vorteilhaft erniedrigt werden.

Besonders bevorzugt wird aus dem Vakuumbehälter kryogener Brennstoff als Flüssigkeit abgezogen und dem Generator als Kühlmedium zugeführt und kryogener Brennstoff als Gas abgezogen und über eine Vakuumpumpe dem Anwärmer und danach der Wärmekraftmaschine als Brennstoff zugeführt.

Die Erfindung bietet eine ganze Reihe von weiteren Vorteilen, von denen im Folgenden nur einige wenige beispielhaft genannt werden:

Durch die energetische Nutzung der Kälte von kryogenen Flüssigkeiten bzw. Kraftstoffen in Energiewandlungsprozessen können die konventionellen Kühlsysteme kleiner ausgelegt werden oder zumindest für Teilsysteme ganz entfallen. Dies ermöglicht die Steigerung des Systemwirkungsgrads und eine Reduzierung der Invest-und Betriebskosten. Analog können Apparate und Systemkomponenten für die Verdampfung und Erwärmung des tiefkalten Brennstoffs vor dem Eintritt in die Wärmekraftmaschine kleiner ausgeführt werden oder entfallen.

In dem dargelegten Ausführungsbeispiel der Generatorkühlung eröffnet sich zudem die Möglichkeit, sowohl den Stator als auch den Rotor auf sehr tiefen Temperaturen zu betreiben und damit die ohmschen Widerstände der Wicklungen deutlich zu reduzieren und den Wirkungsgrad der elektromechanischen Energiewandlung zu steigern. Der spezifische ohmsche Widerstand weist eine lineare Temperaturabhängigkeit nach der Gleichung

$$R(\vartheta) = R20 \cdot (1 + \alpha Cu \cdot (\vartheta - 20°C))$$

auf, d.h. die Stromwärmeverluste nehmen mit sinkender Temperatur linear ab. Wird die Betriebstemperatur beispielsweise von 50 °C auf -150 °C abgesenkt, so reduzieren sich die ohmschen Verluste in den Kupferwicklungen um typischerweise 60 % und der Wirkungsgrad des Generators steigt um ca. 0,5 %. In der Literatur wird die Kühlung des Rotors und des Stators von Synchronmaschinen auf Temperaturen von -85 °C mit Methanol diskutiert, allerdings ist diese Maßnahme aufgrund der notwendigen Kälteanlage weder energetisch noch ökonomisch rentabel. Für die dargestellte Nutzung der Kälte eines kryogenen Brennstoffs ist hingegen keine Kältemaschine mit den damit verbundenen Wirkungsgradverlusten und Zusatzinvestitionen erforderlich.

Durch die Absenkung der Betriebstemperatur erscheint darüber hinaus eine signifikante Erhöhung der Ausnutzung von Synchrongeneratoren möglich, wenn zugleich konstruktive Veränderungen am Luftspalt (Vergrößerung) und an der Statorwicklung (Luftspaltwicklung) vorgenommen werden. Damit lassen sich bei gleicher Nennleistung deutlich kompaktere Maschinen realisieren.

Die Erfindung sowie weitere Ausgestaltungen der Erfindung werden im Folgenden anhand von in den Figuren 1-3 schematisch dargestellten Ausführungsbeispielen näher erläutert. Die Figuren zeigen:

Fig. 1    ein Verfahrensschema für die Grundzüge der vorliegenden Erfindung,

Fig. 2    ein Verfahrensschema für eine Ausgestaltung mit Generatorkühlung,

Fig. 3    ein Verfahrensschema für eine Kühlung eines Generators mit Hochtemperatur-Supraleiter.

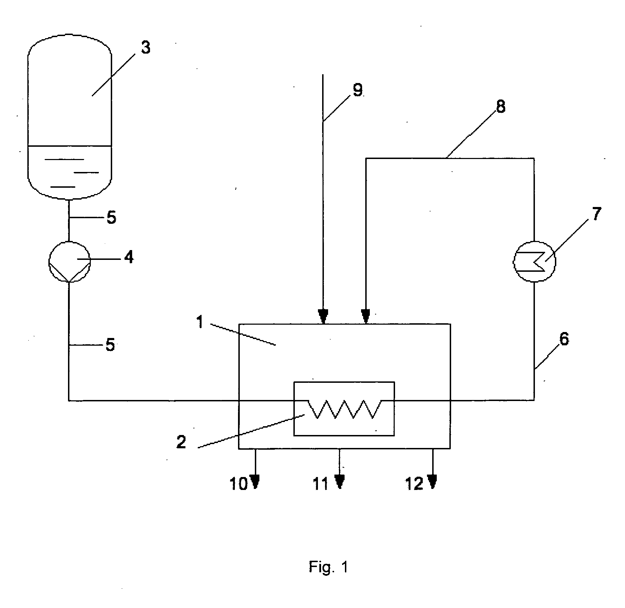

In Figur 1 ist das grundlegende Schema skizziert. Die kryogene Flüssigkeit wird einem Tank 3 entnommen gegebenenfalls, d.h. falls der Prozess dies benötigt, über eine Leitung 5 einer Kryopumpe 4 zugeführt, durch die der Druck der kryogenen Flüssigkeit erhöht werden kann. Anschließend nimmt die kryogene Flüssigkeit die im Energiewandlungsprozess anfallende Verlustwärme auf, wird dabei verdampft und das gasförmige Medium je nach Wärmeanfall aufgeheizt. Die Gesamtheit von Wärmekraftmaschine 1 und elektrischer Einrichtung 2 wird hier auch als Energiewandlungssystem bezeichnet, in dem der Energiewandlungsprozess stattfindet. Die kryogene Flüssigkeit wird dazu über eine Leitung 5 einer elektrischen Einrichtung 2 zugeführt, nimmt dort deren Verlustwärme auf, wird dabei verdampft und im gasförmigen Zustand über eine Leitung 6 einem Nachwärmer 7 zugeführt. Im Nachwärmer 7 wird der gasförmige kryogene Brennstoff weiter erwärmt. Im Anschluss wird der gasförmige kryogene Brennstoff, z.B. Erdgas, über die Leitung 8 der Wärmekraftmaschine 1 zugeführt und mit Hilfe von über die Leitung 9 zugeführtem Oxidans verbrannt. Als Oxidans kommen in der Regel Luft oder technischer Sauerstoff zum Einsatz. Die Abnahme von elektrischer Leistung erfolgt über eine elektrische Leitung 10. Abgas und Abwärme werden über einen Auslass 11 und einen Auslass 12 an die Umgebung abgegeben.

Die spezifischen Wärmekapazitäten betragen 0,62 Wh/(kg·K) für Methangas und 4,0 Wh/(kg·K) für Wasserstoffgas. Vorteilhaft kann auch flüssiges Erdgas zum Einsatz kommen. Nach der Kühlung des Energiewandlers wird der gasförmige Brennstoff ggf. in einem Wärmeübertrager weiter erwärmt, bevor er energetisch genutzt wird.

In der Figur 1 nicht dargestellt ist eine Verbindungsleitung zwischen den Leitungen 5 und 6, die es ermöglicht einen Teil der kryogenen Flüssigkeit an der elektrischen Einrichtung 2 vorbei zu leiten, für den Fall, dass zur Deckung des Brennstoffbedarfs der Wärmekraftmaschine 1 mehr kryogene Flüssigkeit benötigt wird, als zur Deckung des Kühlbedarfs in der elektrischen Einrichtung 2. Eine solche Verbindungsleitung ist also vorteilhaft vorzusehen.

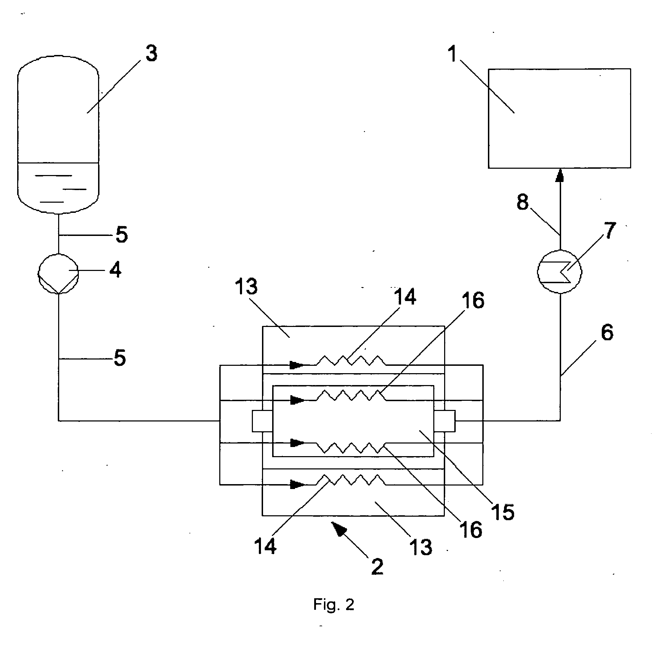

In der Figur 2 wird die kryogene Flüssigkeit ebenfalls einem Tank 3 entnommen und über eine Leitung 5 einem Generator 2 zugeführt. Der Druck der kryogenen Flüssigkeit kann ggf. mit einer dazwischengeschalteten Kryopumpe 4 erhöht werden. Die Kryopumpe 4 ist jedoch nicht in allen Fällen erforderlich. Der flüssige kryogene Brennstoff wird über eine Leitung 5 dem Generator 2 zu Kühlzwecken zugeführt und nimmt die im Generator 2 anfallende Verlustwärme auf, wird dabei verdampft und als gasförmiges Medium über eine Leitung 6 einem Nachwärmer 7 zugeführt, der es je nach Wärmebedarf weiter aufheizt. Der Nachwärmer 7 kann dabei als Vorwärmer für den Brennstoff für die Wärmekraftmaschine 1 aufgefasst werden, der durch das kryogene Fluid im gasförmigen Zustand gestellt wird. Bei genügend hohem Wärmeanfall im Generator 2, kann der Nachwärmer 7 somit auch entfallen. Dies gilt gleichermaßen für den Nachwärmer 7 im Ausführungsbeispiel 1.

Zur Kühlung des Generators 2 werden die konventionell vorhandenen Kühlkanäle 14 und 16 in den Statorblechen 13 und Rotorblechen 15 und/oder in den Wicklungen des Generators als direkte Leiter- oder Teilleiterkühlung mit der kryogenen Flüssigkeit durchströmt, wobei diese erwärmt und gegebenenfalls zumindest teilweise verdampft wird.

Als kryogene Flüssigkeit kommt vorteilhaft flüssiges Erdgas, flüssiger Wasserstoff oder flüssiges Methan zum Einsatz. Nach der Kühlung des Generators 2 wird der gasförmige Brennstoff in einem Nachwärmer 7 ggf. weiter erwärmt, bevor er energetisch in der Wärmekraftmaschine 1 genutzt wird.

Eine Verbindungsleitung, wie im Ausführungsbeispiel 1 beschrieben, kann auch hier zweckmäßigerweise vorgesehen werden.

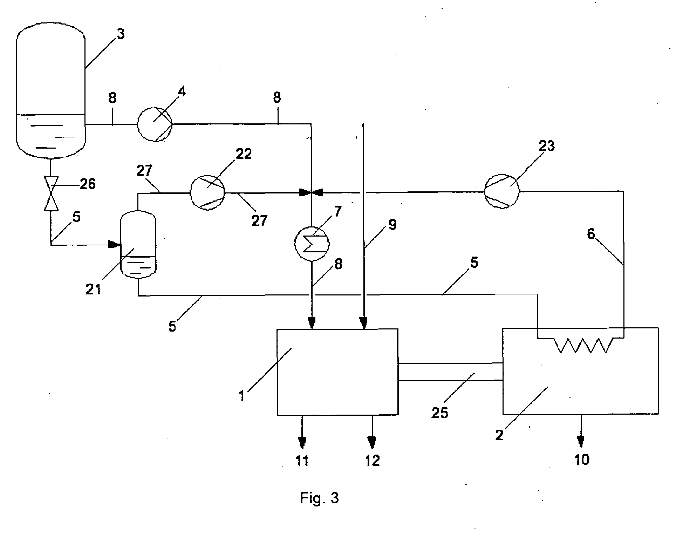

Die Figur 3 zeigt eine Ausgestaltung der Erfindung für den Fall einer Weiterentwicklung der Hochtemperatur-Supraleiter-Technologie (HTS) zu höheren kritischen Temperaturen $T_c$ (Sprungtemperaturen), bei denen der Quench einsetzt. Lassen sich hierfür Werte realisieren, die im Bereich der atmosphärischen Siedetemperatur des kryogenen Brennstoffs liegen, kann in einem aus dem Tank 3 über eine Leitung 5 gespeisten Vakuumbehälter 21 der Druck mit Hilfe einer Vakuumpumpe 22 unter Atmosphäre abgesenkt und der Siedepunkt dadurch weiter erniedrigt werden. Die Leitung 5 weist dabei ein Ventil 26 auf. Die Erläuterungen zu den bereits in den Ausführungsbeispielen 1 und 2 beschriebenen Komponenten mit gleichen Bezugsziffern gelten hier sinngemäß.

Wird der Druck von flüssigem Methan beispielsweise von Atmosphäre auf 0,2 bar(abs) abgesenkt, vermindert sich die Siedetemperatur von ca. 112 K auf 95 K. Das dabei auftretende Flash-Gas wird der Kraftstoffleitung 8 zugeführt. Vom Vakuumbehälter 21 aus wird die kalte Flüssigkeit über eine Leitung 5 zum HTS-Generator 2 gefördert, kühlt diesen und wird über eine Leitung 6 und eine zweite Vakuumpumpe 23 ebenfalls der Kraftstoffleitung 8 zugeführt. Der Hauptanteil des Brennstoffs wird weiterhin von einer kryogenen Pumpe 4 aus dem Tank 3 direkt gefördert und über die Leitung 8 und einen Verdampfer/Anwärmer 7 der Wärmekraftmaschine 1 zugeführt. Die zusammengeführten Teilströme aus den Leitungen 27, 6 und 8 passieren einen Verdampfer/Anwärmer 7, bevor sie in der Wärmekraftmaschine 1 mit Hilfe von über die Leitung 9 zugeführtem Oxidans verbrannt werden. In diesem Beispiel ist zusätzlich die Verbindung zwischen der Wärmekraftmaschine 1 und dem Generator 2 über eine Welle 25 dargestellt. Die Abnahme von elektrischer Leistung aus dem Generator 2 erfolgt über eine elektrische Leitung 10. Abgas und Abwärme werden über einen Auslass 11 und einen Auslass 12 von der Wärmekraftmaschine 1 an die Umgebung abgegeben.

## Patentansprüche

1. Verfahren zum Betreiben einer Wärmekraftmaschine (1) mit einer nachgeschalteten elektrischen Einrichtung (2), bei dem ein als kryogene Flüssigkeit in einem Tank (3) gelagerter Brennstoff eingesetzt und dazu dem Tank (3) entnommen wird, **dadurch gekennzeichnet, dass** die kryogene Flüssigkeit nach der Entnahme aus dem Tank (3) zuerst in der Funktion eines Kühlmediums der elektrischen Einrichtung (2) zugeführt und mit mindestens einer Komponente (13, 15) der elektrischen Einrichtung (2) in einen direkten wärmeaustauschenden Kontakt gebracht wird, und danach der Wärmekraftmaschine (1) als Brennstoff zugeführt wird, wobei die kryogene Flüssigkeit vor diesem Schritt in die gasförmige Phase überführt wird.

2. Verfahren nach Anspruch 1, **dadurch gekennzeichnet, dass** als elektrische Einrichtung (2) ein oder mehrere elektrische Generatoren, Motoren, Transformatoren, Elektromagnete oder leistungselektronische Bauteile (2) oder Kombinationen der genannten Ausgestaltungen eingesetzt werden.

geführt wird.

3. Verfahren nach Anspruch 1 oder 2, **dadurch gekennzeichnet, dass** als Brennstoff Erdgas, Wasserstoff oder Methan oder andere kryogene Fluide eingesetzt werden.

4. Verfahren nach einem der Ansprüche 1 bis 3, **dadurch gekennzeichnet, dass** als Wärmekraftmaschine (1) ein Verbrennungsmotor (1) eingesetzt wird.

5. Verfahren nach einem der Ansprüche 1 bis 4, **dadurch gekennzeichnet, dass** beim Einsatz eines Generators (2) als elektrische Einrichtung (2) die konventionell vorhandenen Kühlkanäle (14, 16) in den Stator- und Rotorblechen (13, 15) und/oder in den Wicklungen des Generators (2) als direkte Leiter- oder Teilleiterkühlung mit der kryogenen Flüssigkeit durchströmt werden, wobei diese erwärmt und gegebenenfalls zumindest teilweise verdampft wird.

6. Verfahren nach einem der Ansprüche 1 bis 5, **dadurch gekennzeichnet, dass** die kryogene Flüssigkeit nach der Entnahme aus dem Tank (3) einer Kryopumpe (4) zugeführt wird, durch die der Druck der kryogenen Flüssigkeit erhöht wird.

7. Verfahren nach einem der Ansprüche 1 bis 6, **dadurch gekennzeichnet, dass** der kryogene Brennstoff nach Passieren der elektrischen Einrichtung (2) und dem direkten wärmeaustauschenden Kontakt und vor dem Eintritt in die Wärmekraftmaschine (1) einem Nachwärmer (7) zugeführt wird, wobei der kryogene Brennstoff durch den Nachwärmer (7) weiter erwärmt wird.

8. Verfahren nach einem der Ansprüche 1 bis 5, **dadurch gekennzeichnet, dass** als elektrische Einrichtung (2) ein Generator (2) eingesetzt wird, der einen Hochtemperatur-Supraleiter aufweist.

9. Verfahren nach Anspruch 8, **dadurch gekennzeichnet, dass** ein Teilstrom des als Flüssigkeit in dem Tank (3) vorliegenden kryogenen Brennstoffs nach Entnahme aus dem Tank (3) über einen Anwärmer (7) direkt der Wärmekraftmaschine zugeführt wird und ein Teilstrom in einen Vakuumbehälter (21) eingespeist wird.

10. Verfahren nach Anspruch 9, **dadurch gekennzeichnet, dass** aus dem Vakuumbehälter (21) kryogener Brennstoff als Flüssigkeit abgezogen und dem Generator (2) als Kühlmedium zugeführt wird und kryogener Brennstoff als Gas abgezogen und über eine Vakuumpumpe (22) dem Anwärmer (7) und danach der Wärmekraftmaschine (1) als Brennstoff zu-

Fig. 1

Fig. 2

Fig. 3

**Europäisches Patentamt**
**European Patent Office**
**Office européen des brevets**

## EUROPÄISCHER RECHERCHENBERICHT

Nummer der Anmeldung

EP 11 00 9122

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 3 842 333 A (HENCEY T ET AL) 15. Oktober 1974 (1974-10-15) | 1-5,7,8 | INV. F01D15/00 F01K25/10 F17C9/04 |
| Y | * das ganze Dokument * ----- | 6,9,10 | |
| X | US 3 870 942 A (BOESE HAROLD L ET AL) 11. März 1975 (1975-03-11) | 1-5,7,8 | |
| Y | * das ganze Dokument * ----- | 6,9,10 | |
| X | US 3 681 609 A (BOESE HAROLD L ET AL) 1. August 1972 (1972-08-01) | 1-5,7,8 | |
| Y | * Spalte 2, Zeile 11 - Spalte 5, Zeile 42 * ----- | 6,9,10 | |
| Y | DE 20 28 158 A1 (INT RESEARCH & DEV CO LTD) 1. April 1971 (1971-04-01) * Seite 5, Absatz 6 - Seite 10, Absatz 2 * ----- | 6,9,10 | |
| Y | US 3 614 493 A (COLLINGS HAROLD E ET AL) 19. Oktober 1971 (1971-10-19) * Spalte 2, Zeile 10 - Spalte 3, Zeile 75 * ----- | 6,9,10 | |
| Y | US 3 609 418 A (HALAS EDWARD) 28. September 1971 (1971-09-28) * Spalte 4, Zeile 16 - Spalte 11, Zeile 10 * ----- | 6,9,10 | RECHERCHIERTE SACHGEBIETE (IPC) F01D F01K F17C |
| A | US 672 256 A (BOBRICK GABRIEL A [US]) 16. April 1901 (1901-04-16) * Spalte 2, Zeile 11 - Spalte 3, Zeile 64 * ----- | 1-10 | |

Der vorliegende Recherchenbericht wurde für alle Patentansprüche erstellt

| Recherchenort | Abschlußdatum der Recherche | Prüfer |
|---|---|---|
| München | 1. März 2012 | Stängl, Gerhard |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 11 00 9122

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-03-2012

| Im Recherchenbericht angeführtes Patentdokument | | Datum der Veröffentlichung | Mitglied(er) der Patentfamilie | | Datum der Veröffentlichung |
|---|---|---|---|---|---|
| US 3842333 | A | 15-10-1974 | KEINE | | |
| US 3870942 | A | 11-03-1975 | KEINE | | |
| US 3681609 | A | 01-08-1972 | CA | 932161 A1 | 21-08-1973 |
| | | | CH | 522519 A | 30-06-1972 |
| | | | DE | 2133527 A1 | 15-06-1972 |
| | | | ES | 397594 A1 | 01-07-1974 |
| | | | FR | 2117029 A5 | 21-07-1972 |
| | | | GB | 1352630 A | 08-05-1974 |
| | | | IT | 945188 B | 10-05-1973 |
| | | | JP | 54009261 B | 23-04-1979 |
| | | | SE | 365843 B | 01-04-1974 |
| | | | US | 3681609 A | 01-08-1972 |
| DE 2028158 | A1 | 01-04-1971 | DE | 2028158 A1 | 01-04-1971 |
| | | | FR | 2051048 A5 | 02-04-1971 |
| | | | GB | 1315302 A | 02-05-1973 |
| | | | JP | 54031162 B1 | 05-10-1979 |
| | | | SE | 377871 B | 28-07-1975 |
| | | | US | 3648082 A | 07-03-1972 |
| US 3614493 | A | 19-10-1971 | KEINE | | |
| US 3609418 | A | 28-09-1971 | KEINE | | |
| US 672256 | A | 16-04-1901 | KEINE | | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006042054
- JP 10092627 A
- WO 2007144103 A
- WO 9942706 A
- EP 0580910 A
- JP 2002130851 A
- WO 2007001432 A